Europäisches Patentamt

European Patent Office

Office européen des brevets

(11) Numéro de publication: **0 042 800**
**B1**

(12) **FASCICULE DE BREVET EUROPEEN**

(45) Date de publication du fascicule du brevet: **06.02.85**

(51) Int. Cl.⁴: **G 01 N 1/24**

(21) Numéro de dépôt: **81400994.0**

(22) Date de dépôt: **19.06.81**

(54) **Appareil de collecte d'un mélange gazeux et de prélèvement d'échantillons en vue de l'analyse des constituants du mélange.**

(30) Priorité: **19.06.80 FR 8013616**

(43) Date de publication de la demande:
**30.12.81 Bulletin 81/52**

(45) Mention de la délivrance du brevet:
**06.02.85 Bulletin 85/06**

(84) Etats contractants désignés:
**AT BE CH DE GB IT LI LU NL SE**

(56) Documents cités:
**FR-A-1 556 055**
**US-A-3 603 155**
**US-A-3 817 100**
**US-A-3 965 749**

**S.A.E. JOURNAL, vol. 77, no. 12, décembre 1969, NEW YORK (US) S.H. MICK et al.: "Use of constant volume sampler to weigh exhaust emissions poses variety of problems" pages 34-36**

(73) Titulaire: **Union de Syndicats dite: UNION TECHNIQUE DE L'AUTOMOBILE, DU MOTOCYCLE ET DU CYCLE -U.T.A.C.-157-159 rue Lecourbe**
**F-75015 Paris (FR)**

(72) Inventeur: **Le Guen, Henri**
**4 Avenue Joseph Groussin**
**F-91370 - Verrieres le Buisson (FR)**
Inventeur: **Favennec, Jean**
**53 Bld Arago**
**F-75013 - Paris (FR)**

(74) Mandataire: **Bruder, Michel**
**10 rue de la Pépinière**
**F-75008 Paris (FR)**

Courier Press, Leamington Spa, England.

## Description

La présente invention concerne un appareil de collecte d'un mélange gazeux et de prélèvement d'échantillons en vue de l'analyse des constituants du mélange, cet appareil étant destiné plus particulièrement mais non exclusivement à la mesure des agents polluants présents dans les gaz d'échappement des véhicule automobiles.

Les diverses réglementations précisent les modes de prélèvement des émissions et d'analyse pour chacun des constituants émis.

La procédure européenne impose des prescriptions relatives à un prélèvement global dans un sac approprié après pasage dans un refroidisseur d'efficacité définie. La mesure des teneurs des constituants contenus dans le sac et du volume corrigé pour ramener celui-ci à des conditions standardisées permet, en adoptant une masse volumique réglementaire, d'obtenir le poids de chacun des constituants émis sous la forme $CO—CO_2—HC$ totaux, $NO_x—O_2$, etc.

La procédure américaine dite "à dilution variable" est fondée sur le principe qu'il est nécessaire, pour éviter les évolutions des constituants au cours de leur stockage dans un sac, de mélanger les émissions avec un volume d'air suffisant pour abaisser les temps de réaction au-dessous d'une valeur compatible avec le temps global de l'essai comprenant le prélèvement et l'analyse.

Ce dispositif comprend notamment un échangeur ramenant le mélange à une température déterminée, un organe d'aspiration (généralement un compresseur volumérique ou un ventilateur associé à un venturi critique pour mesurer le débit) et un dispositif de prélèvement couplé avec le système d'aspiration de façon à prélever une partie aliquote du mélange et permettant son stockage dans un sac de faible volume. En général, plusieurs sacs sont prévus dont un au moins pour l'analyse de l'air de dilution. La teneur mesurée dans le sac, ainsi que le volume du mélange prélevé et rapporté au taux de prélèvement, permet le calcul masique de chacun des constituants analysés.

Parmi les appareils du type précité, on connaît déjà ceux décrits dans l'article de S. H. Mick ayant pour titre "Use of constant volume sampler to weigh exhaust emissions poses variety of problems" paru dans la revue S. A. E. Journal vol. 77, no. 12 Décembre 1969 p. 34—36, ainsi que dans les brevets US—A—3 817 100 et FR—A—1 556 055.

L'appareil de collecte d'un mélange gazeux et de prélèvement d'échantillons en vue de l'analyse des constituants du mélange, applicable notamment à la mesure des agents polluants émis par les véhicules automobiles, qui est décrit dans l'article de la revue S.A.E. Journal, comporte un tube de mélange dans lequel débouche le tuyau d'échappement des gaz, un ventilateur aspirant, à débit demeurant sensiblement constant, branché à l'extrémité aval du tube de mélange, pour refouler le mélange dans une tubulure d'évacuation, le tube de mélange agissant en tant que chambre de dilution et également échangeur thermique, et une sonde de prélèvement du mélange de gaz et d'air laquelle est située dans la partie aval du tube formant la chambre de dilution.

Tous les dispositifs connus à ce jour présentent un certain nombre d'inconvénients: leur coût est généralement élevé, ils sont relativement complexes en ce qui concerne les appareils à dilution variable et dans le cas du dispositif utilisant un grand sac, le volume de gaz collecté est forcément limité.

La présente invention vise à remédier à ces inconvénients en procurant un appareil de conception très simple, fiable, maniable, économique et universel dans ses utilisations et donnant des résultats équivalents à ceux des appareils réglementaires prévus.

A cet effet, cet appareil de collecte d'un mélange gazeux et de prélèvement d'échantillons en vue de l'analyse des constituants du mélange, applicable notamment à la mesure des agents polluants émis par les véhicules automobiles, selon le préambule de la revendication 1, est caractérisé en ce que la partie extrême amont du tube de mélange entoure la partie extrême aval du tuyau d'échappement ménageant un espace libre entre les deux tubes pour permettre l'entrée d'air de dilution.

Suivant une variante de réalisation de l'invention, la partie extrême amont du tube horizontal est évasée en forme de convergent entourant la partie extrême aval du tuyau d'échappement.

Suivant une autre variante de réalisation de l'invention, des chicanes sont prévues dans le tube horizontal pour favoriser la turbulence du mélange de gaz et d'air.

On décrira ci-après une forme d'exécution de la présente invention en référence au dessin annexé sur lequel.

La figure 1 est un schéma de principe de l'appareil de collecte d'un mélange gazeux suivant l'invention;

La figure 2 est une vue en perspective éclatée des principaux éléments constitutifs de l'appareil représenté sur la figure 1.

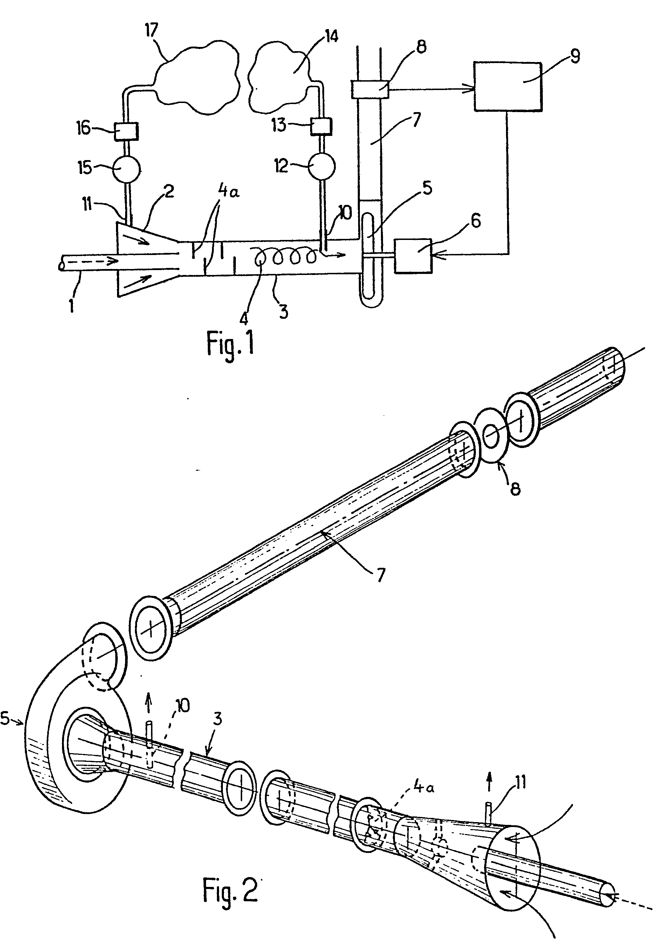

L'appareil représenté schématiquement sur la figure 1 est prévu pour analyser des constituants d'un mélange gazeux sortant d'un tuyau d'échappement 1, par exemple d'un véhicule automobile. Ce tuyau d'échappement débouche axialement dans la partie extrême d'un tube de mélange 3 qui constitue à l'intérieur une chambre 4 de dilution des gaz. La partie extrême amont 2 du tube 3 est évasée vers l'extérieur, de manière à former un convergent entourant la partie extrême aval du tuyau d'échappement 1. Dans le partie amont du tube 3 constituant la chambre de dilution 4, en aval de la partie évasée 2, se trouvent des chicanes 4a favorisant la dilution. A son extrémité aval, le tube de mélange 3 est raccordé à un ventilateur centrifuge 5 entraîné par un moteur électrique 6. Ce ventilateur 5 refoule le mélange de gaz et d'air dans une tubulure d'évacuation 7 conduisant le gaz vers une cheminée d'extraction extérieure. Dans la tubulure d'évacuation 7 est prévu un dispositif déprimogène 8 qui est connecté à un mini-ordinateur 9 commandant l'alimentation du moteur électrique 6, de manière à assurer un débit constant.

Les gaz introduits par le tuyau d'échappement 1 dans le tube horizontal 3 sont dilués avec de l'air ambiant qui pénètre dans ce tube 3 par sa partie évasée amont 2, comme il est indiqué par les flèches en trait plein. Le brassage des gaz et de l'air est amélioré par suite de la prévision des chicanes 4a.

La longueur du tube 3 et son aménagement intérieur et/ou extérieur sont tels que la température des gaz est amenée à une valeur fixée qui est fonction de celle de la salle dans laquelle est prélevé l'air de dilution. Cette condition essentielle est obtenue grâce à un raport de dilution air/gaz très élevé et fourni grâce au ventilateur 5 ayant un débit important devant celui des gaz d'échappement des véhicules.

Le dispositif permet d'avoir un rapport variable entre le volume de gaz émis et le volume d'air de dilution, tandis que le volume total (gaz émis+air de dilution) demeure sensiblement constant, de même que la température. Le diamètre du tube de mélange 3 formant la chambre de dilution 4 est tel qu'il doit assurer une homogénéité satisfaisante des gaz émis et de l'air de dilution. Ce tube 3 maintient le gaz à température pratiquement constante, par l'intermédiaire ou non d'ailettes de refroidissement ou de tout autre système jouant le rôle d'un échangeur de température.

Deux sondes de prélèvement 10 et 11 sont prévues respectivement pour le mélange de gaz à température sensiblement constante et pour l'air de dilution sensiblement à la même température que celle du mélange. La sonde 10 de prélèvement du mélange de gaz et d'air est située dans la partie aval du tube 3 formant la chambre de dilution 4 et cette sonde est reliée par une canalisation à une pompe d'extraction 12, à un débitmètre 13 et à un sac 14 en matière inerte dans lequel est recueilli l'échantillon de gaz prélevé.

De la même façon, la sonde il assurant le prélèvement d'air de dilution est située sur la partie amont évasée 2 du tube 3 et elle est reliée, par l'intermédiaire d'une canalisation, à une pompe d'extraction 15, à un débitmètre 16 et à un sac 17 en matière inerte dans lequel est recueilli l'échantillon d'air de dilution.

L'organe déprimogène 8 est un diaphragme qui est étalonné par rapport à un débitmètre étalon (turbine par exemple). Ce diaphragme est placé à la sortie du ventilateur 5 à une distance qui est fonction du diamètre de la tubulure 7 pour effectuer une mesure correcte.

Le mesure de la pression et de la dépression de l'organe déprimogène 8 est réalisée par deux manomètres et la température par une thermosonde. Ces informations sont suffisantes pour effectuer la mesure du débit de gaz collecté pendant la durée d'un essai. Ces informations sont transmises au mini-ordinateur 9 qui pilote le moteur 6 entraînant le ventilateur 5.

Le débit du ventilateur 5 est calculé de manière qu'il permette, en fonction du diamètre du tube d'amenée des gaz 3, d'aspirer l'ensemble des gaz d'échappement de telle sorte que le régime d'écoulement du mélange dans le tube 3 soit turbulent.

On voit d'après ce qui précéde que l'appareil suivant l'invention est d'une conception très simple et qu'il permet de mettre directement le tuyau d'échappement 1 d'un véhicule automobile à l'entrée du dispositif de collecte sans l'adjonction de divers tuyaux, ce qui est toujours préjudiciable au point de vue perte de charge. Dans l'appareil selon l'invention, la perte de charge est pratiquement nulle et le système d'échappement est placé dans des conditions pratiquement identiques au fonctionnement sur route et seul un appareil de ce genre permet un prélèvement dans ces conditions.

**Revendications**

1. Appareil de collecte d'un mélange gazeux et de prélèvement d'échantillons en vue de l'analyse des constituants du mélange, applicable notamment à la mesure des agents polluants émis par les véhicules automobiles, comportant un tube de mélange (3) dans lequel débouche le tuyau d'échappement des gaz (1), un ventilateur aspirant (5), à débit demeurant sensiblement constant, branché à l'extrémité aval du tube de mélange (3) pour refouler le mélange dans une tubulure d'évacuation (7), le tube de mélange (3) agissant en tant que chambre de dilution (4) et également échangeur thermique, et une sonde (10) de prélèvement du mélange de gaz et d'air laquelle est située dans la partie aval du tube (3) formant la chambre de dilution (4), caractérisé en ce que la partie extrême amont (2) du tube de mélange (3) entoure la partie extrême aval du tuyau d'échappement (1) ménageant un espace libre entre les deux tubes (2, 3) pour permettre l'entrée d'air de dilution.

2. Appareil suivant la revendication 1 caractérisé en ce que la partie extrême amont (2) du tube de mélange (3) est évasée en forme de convergent entourant la partie extrême aval du tuyau d'échappement (1) pour favoriser l'introduction d'air de dilution.

3. Appareil suivant l'une quelconque des revendications 1 et 2 caractérisé en ce que des chicanes (4a) sont prévues dans le tube de mélange (3) pour favoriser la turbulence du mélange de gaz et d'air.

4. Appareil suivant l'une quelconque des revendications 1 à 3 caractérisé en ce que dans la tubulure d'évacuation (7) est prévu un dispositif déprimogène (8) dont les informations sout transmises à un mini-ordinateur (9) commandant l'alimentation d'un moteur électrique (6) entraînant le ventilateur (5).

5. Appareil suivant l'une quelconque des revendications 1 à 4 caractérisé en ce que la sonde (10) est reliée par une canalisation à une pompe d'extraction (12), à un débitmètre (13) et à un sac (14) en matière inerte dans lequel est recueilli l'échantillons de gaz prélevé.

6. Appareil suivant l'une quelconque des revendications 1 à 5 caractérisé en ce qu'une sonde (11) assurant le prélèvement d'air de dilution est située sur la partie amont évasée (2) du tube (3) et est reliée, par l'intermédiaire d'une canalisation, à une pompe d'extraction (15), à un débitmètre (16) et à un sac (17) en matière inerte dans lequel est recueilli l'échantillon d'air de dilution.

## Patentansprüche

1. Sammelvorrichtung für zum Sammeln einer gesartigen Mischung und zur Probeentnahme mit Hinblick auf die Analyse der Bestandteile der Mischung, insbesondere für die Messung von verunreinigenden Wirkstoffen, die von Kraftfahrzeugen abgegeben werden, mit einem Mischungsrohr (3), in welchem die Gasaustrittsröhre (1) mündet, einem Sauglüfter (5) mit im Wesentlichen konstant bleibender Durchflußleistung, der am stromabseitigen Ende des Mischrohrs (3) abgezweigt ist um die Mischung in einem Unterdruckraum (7) zu stauen, wobei das Mischrohr (3) insoweit als Verdünnungskammer und außerdem als Wärmetauscher dient, und mit einer Sonde (10) zur Entnahme der Mischung von Gas und Luft, welche in dem stromabwärtigen Teil des Rohrs (3) angeordnet ist, welche die Verdünnungskammer (4) bildet, dadurch gekennzeichnet, daß der stromaufwärtige Endbereich (2) des Mischrohrs (3) den stromabwärtigen Endbereich die Austrittsröhre (1) umgibt und einen Freiraum zwischen den beiden Rohren (2, 3) frei läßt, und damit den Eintritt von Verdünnungsluft zuläßt.

2. Vorrichtung nach Anspruch 1, dadurch gekennzeichnet, daß der stromaufwärtige Endbereich (2) des Mischrohrs (3) glockig konusförmig den stromabwärtigen Endbereich der Austrittsröhre (1) umgebend zum begünstigen der Einführung von Verdünnungsluft ausgebildet ist.

3. Vorrichtung nach einem der Ansprüche 1 oder 2, dadurch gekennzeichnet, daß Hindernisse (4a) in dem Mischrohr (3) zur Begünstigung der Turbulenz des Gemisches aus Gas und Luft vorgesehen sind.

4. Vorrichtung nach einem der Ansprüche 1 bis 3, dadurch gekennzeichnet, daß in dem Unterdruckraum (7) eine druckempfindliche Vorrichtung (8) vorgesehen ist, dessen Informationen an einen Kleinrechner (8) geleitet werden, der die Speisung eines den Ventilator (5) antreibenden Elektomotors steuert.

5. Vorrichtung nach einem der Ansprüche 1 bis 4, dadurch gekennzeichnet, daß die Sonde (10) durch eine Rohrverbindung mit einer Förderpumpe (12) mit einem Durchflußmesser (13) und einem Beutel (14) aus einem inerten Werkstoff verbunden ist, in welchem die entnommenen Gasproben gesammelt werden.

6. Vorrichtung nach einem der Ansprüche 1 bis 5, dadurch gekennzeichnet, daß eine Sonde (11), die die Entnahme von Verdünnungsluft sicherstellt, in dem stromaufwärtigen, glockenförmigen Bereich (2) des Rohrs (3) angeordnet und über eine Rohrverbindung mit einer Förderpumpe (15), einem Durchflußmesser (16) und mit einem Beutel (17) aus einem inerten Werkstoff verbunden ist, in welchem die Proben der Verdünnungsluft gesammelt werden.

## Claims

1. Device for collecting a gas mixture and for sampling with a view to analyzing the constituents of the mixture, applicable in particular to measuring the pollution agents emitted by automobile vehicles, comprising a mixer tube (3) into which opens the gas exhaust pipe (1), a sucking fan (5), with a rate of flow remaining substantially constant, connected to the downstream end of the mixer tube (3) in order to deliver the mixture in an evacuation pipe (7), the mixer tube (3) acting as dilution chamber (4) and also as heat exchanger, and a probe (10) for sampling the mixture of gaz and air which is located in the downstream part of the tube (3) forming the dilution chamber (4), characterized in that the upstream end part (2) of the mixer tube (3) surrounds the downstream end part of the exhaust pipe (1) forming a free space between the two tubes (2, 3) to allow dilution air to enter.

2. A device according to claim 1, wherein the upstream end part (2) of the mixer tube (3) is flared in convergent form, surrounding the downstream end part of the exhaust pipe (1) in order to promote the introduction of dilution air.

3. A device according to claims 1 and 2, wherein baffles (4a) are provided in the mixer tube (3) in order to promote the turbulence of the mixture of gas and air.

4. A device according to claims 1 to 3, wherein in the evacuation pipe (7), there is provided a depression-forming device (8) of which the data are transmitted to mini-computer (9) controlling the supply of an electric motor (6) driving the fan (5).

5. A device according to claims 1 to 4, wherein to probe (10) is connected by a pipe to an extraction pump (12), to a flow meter (13) and to a bag (14) made of inert material in which the sample of sampled gas is collected.

6. A device according to claims 1 to 5, wherein a probe (11) ensuring the sampling of dilution air is located on the flared upstream part (2) of the tube (3) and is connected, via a pipe, to an extraction pump (15), to a flow meter (16) and to a bag (17) made of inert material in which the sample of dilution air is collected.

Fig. 1

Fig. 2